(19)

Europäisches
Patentamt
European
Patent Office
Office européen
des brevets

(11) **EP 3 097 790 B1**

(12) **EUROPEAN PATENT SPECIFICATION**

(45) Date of publication and mention
of the grant of the patent:
**16.05.2018 Bulletin 2018/20**

(51) Int Cl.:
***A23L 2/62*** *(2006.01)*     ***A23L 2/56*** *(2006.01)*
***A23L 2/52*** *(2006.01)*

(21) Application number: **15169266.2**

(22) Date of filing: **26.05.2015**

(54) **TURBID BEVERAGES WITH IMPROVED STORAGE STABILIY**

TRÜBE GETRÄNKE MIT VERBESSERTER LAGERSTABILITÄT

BOISSONS BOUCHES AVEC STABILITÉ DE STOCKAGE AMÉLIORÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.11.2016 Bulletin 2016/48**

(73) Proprietor: **Symrise AG
37603 Holzminden (DE)**

(72) Inventors:
• **Linke, Christina
37603 Holzminden (DE)**
• **Weißbrodt, Jenny
37603 Holzminden (DE)**

• **Sabater, Christopher
37603 Holzminden (DE)**
• **Drusch, Stephan
12161 Berlin (DE)**

(74) Representative: **Fabry, Bernd
IP2 Patentanwalts GmbH
Schlossstrasse 523-525
41238 Mönchengladbach (DE)**

(56) References cited:
**EP-A1- 2 025 250     WO-A1-2008/148383
WO-A1-2011/119290     WO-A2-2007/066233
US-A- 6 086 938**

EP 3 097 790 B1

## Description

### FIELD OF INVENTION

The present invention belongs to the area of food compositions and refers to a turbid beverage with improved storage stability and taste performance.

### STATE OF THE ART

The degree of turbidity is an important parameter reflecting the quality of a cloudy fruit juice. Therefore the visual appearance of a cloudy drink is a critical factor for consumer acceptance. Turbidity in fruit-derived beverages gives a natural appearance, and is achieved through addition of so-called clouds or clouding agents to the majority of non-alcoholic beverages.

A cloud provides turbidity, flavour, aroma, mouthfeel and optionally colour and is typically added in concentrations of 0.01 - 0.2 wt. % of the final product. Clouds are concentrated oil-in-water emulsions in which the turbidity results from the scattering of light by dispersed oil droplets with oil droplet size between 0.1-1.0 $\mu$m. In this context the scattering of light is governed by the size and concentration of the dispersed phase, the ratio of refractive index (RI) between disperse and continuous phase and the wavelength and angle of the incident light.

Concerning its composition a cloud is most commonly stabilized by amphiphilic polysaccharides, such as gum Arabic or hydrophobic modified starch. The oil phase usually consists of vegetable oil, flavour oil, and a weighting agent. Weighting agents increase the density of the oil phase and therefore contribute to the stabilization of an emulsion through minimization of the difference in density between the different phases. A typical weighting agent is the glycerol ester of wood rosin (glyceryl abietate). With respect to the final application it needs to be mentioned that the aqueous phase of a beverage emulsion is normally acidic with a pH below 3. A finished beverage typically consists additionally of sugar (10°Brix) and/or sweetener, citric acid and preservative.

In the past turbidity measurement was mainly used as a tool to investigate possible clouding agents and cloud stability as the most critical quality parameter of a beverage emulsion is its stability in the diluted state. In contrast, only a little work has been done on the relationship between the human visual perception of turbidity and instrumental turbidity measurement. Few studies are available, in which minimum thresholds of the perception of turbidity were determined for example by Fleet et al. "Effect of illumination intensity on visual perception of turbidity", in: Food Qual. Pref. 16, p.536-544 (2005).

*Malcomson et al.* examined the relationship of human perception for apple juice and instrumental turbidity values. They concluded that a change in clarity was only observed by the sensory panel at a large difference in instrumental reading. This may be due to the fact, that turbidity was measured at a 90° detection angle which is very sensitive for small particles but which contribute only little to perceived turbidity. Another important factor might be the colour of apple juice [Can. Inst. Food Sci. Technol. J. 22, p. 129-132 (1989)].

*Carrasco et al.* found turbidity thresholds for the human response below 1 NTU, but under very controlled viewing conditions with a defined light source and a box with a black background [Food Qual. Pref. 10, p. 421-436(1999)]

*Horne et al.* on the other hand measured visual haze detection thresholds for differently coloured emulsions under less controlled conditions to simulate a consumer situation. The thresholds with up to 4.5 NTU reported are much higher than the results previously reported by the group of Carrasco et al. (1999), but overall are still very low [J. Sens. Stud. 16, p. 447-460 (2001)]

Furthermore, Carrasco et al. investigated the influence of colour on the human visual perception of turbidity. He found that higher particle concentrations were needed to detect haze in red-coloured suspensions as compared with yellow-coloured or clear suspensions. Fleet et al. compared in a similar study clear, caramel- and dark brown-coloured suspensions and found thresholds between 0.2 - 2.2 NTU with the lowest values for clear and the highest results for dark brown-coloured samples. As turbidity measurements were operated with white light, the readings were influenced by the colour as well and might have produced more pronounced differences at NIR-LED readings.

The latter can be concluded from a study by *Hongve et al.* who compared white light measurements against readings at 860 nm, and found that absorption due to colour present reduces NTU (ratio) readings. On the other hand, at high turbidity levels saturation may occur and panellist are possibly not able any more to distinguish different levels of turbidity [Water Res., 32, p. 3143-3145 (1998)].

*Carrasco et al.* concluded from a magnitude estimation study that the panellist response became saturated at higher turbidity above 500 NTU. Anyhow no literature on the question, what difference in turbidity can be distinguished by human visual perception at a specific level of turbidity, is available. This holds particularly true for very high levels of turbidity up to 10.000 NTU as they may occur in cloudy beverages and juice concentrates.

US 3,959,510 (KAPP) proposes cloudy beverages comprising essential oils, vegetable oils and natural gum resins.

Reference is made to US 4,971,828 (AMERICAN MAIZE PRODUCTS) disclosing a beverage clouding agent that is obtained from acid hydrolysis of starch.

EP 2601848 A1 (SENSIENT) refers to an emulsion for use in nutrition comprising plant lipids and specific saponins. The products are described as being stable also under acidic conditions.

WO 2008 148383 A1 (UNIVERSIT JENA) refers to food emulsions, comprising proteins and polysaccharides. A further mandatory feature is the presence of essential oils showing a specific density. The average particle size of the droplets in the emulsion is 0.97 $\mu$m, which is by far too much for preparing beverages with both turbid aspect and sufficient stability.

From the literature outlined above it becomes evident that the correlation of human visual perception and instrumental reading is of major interest in consumer studies and the beverage industry. On the other hand additional investigations were made to optimize beverage clouding systems as these studies did not focus exclusively on turbidity, it cannot definitely be concluded what the influencing factors are.

Hence, the object of the present has been investigating the factors influencing the turbidity of a beverage clouding system and providing a beverage in the form of an emulsion that simultaneously offers the following advantages:

- High storage stability at different temperatures

- High turbidity at low concentration of cloudifiers

- No tendency for coalescence

- No tendency for developing unpleasant taste

- High stability also at low pH values of less than 3.

DESCRIPTION OF THE INVENTION

The experiments underlying the present invention evidenced that modification of the continuous phase of a cloud cannot be considered as a suitable strategy to modify turbidity of a beverage emulsion; since the properties of the continuous phase are governed by the final beverage properties and instability issues may occur. The effect of excess emulsifier on turbidity as determined by turbidity measurement is not relevant for beverages, since the effect was below the minimum difference panellist could distinguish at that level of turbidity.

Also, the sensory evaluation of the human visual perception of turbidity showed that humans are most sensitive to turbidity differences between two samples in the range between 1.000 to 1.500 NTU (ratio). At very high turbidity values a difference of more than 2.000 TU in NTU (ratio) was needed to perceive significant difference between samples.

It is worth to mention that it has been surprisingly discovered that turbidity of an emulsion seriously depends on the difference between the refractive index of the aqueous and the non-aqueous phase. Increasing the difference leads to a higher turbidity.

Therefore, a first object of the present invention is a turbid oil-in-water emulsion with improved stability, comprising

(a) at least one essential oil;

(b) at least one lipid;

(c) at least one emulsifier; and

(d) at least one glycerol ester of wood rosin,
wherein

(i) the average particle size x(50) of the oil droplets in said emulsion ranges from 0.1 to 0.6 $\mu$m and/or
(ii) i) the difference between the average particle size x(90) and the average particle size x(10) is less than 0.8 $\mu$m, and

wherein
x(50) means the average particle size that 50 wt. % of all droplets in the emulsion show;
x(90) means the average particle size that 90 wt. % of all droplets in the emulsion show; and
x(10) means the average particle size that 10 wt. % of all droplets in the emulsion show.

Surprisingly, it has been observed that among the parameters affecting turbidity in beverage emulsions, particle size was the most important. It was also found that o/w emulsions within the claimed particle size also show improved storage stability in terms of phase separation. The emulsions were stable over a period of 6 weeks and within a temperature range of 5 to 40 °C. Another advantage was found with regard to a pleasant taste that did not undergo changes over the time. Finally, the emulsions were found stable also at low pH values of less than 4, in particular at pH = 3. In a dilution of the cloud typical for a beverage emulsion a change in the refractive index of the oil phase may allow the alteration of turbidity by up to 30%.

## ESSENTIAL OILS

An essential oil is a concentrated hydrophobic liquid containing volatile aroma compounds from plants. Essential oils are also known as volatile oils, ethereal oils, aetherolea, or simply as the "oil of" the plant from which they were extracted, such as oil of clove. An oil is "essential" in the sense that it contains the "essence of" the plant's fragrance- the characteristic fragrance of the plant from which it is derived. Essential oils are generally extracted by distillation, often by using steam. Other processes include expression or solvent extraction. They are used in perfumes, cosmetics, soaps and other products, for flavouring food and drink, and for adding scents to incense and household cleaning products
Preferably, said essential oils forming compound (a) represent citrus oils which are in particular selected from the group consisting of orange oil, citrus oil, lime oil, mandarin oil and their mixtures.

## LIPIDS

Preferred lipids forming compound (b) are so-called mid-chain (or medium-chain) triglycerides (MCT). MCTs are triglycerides whose fatty acids have an aliphatic tail of 6 to 12 carbon atoms. The fatty acids found in MCTs are called mid/medium-chain fatty acids (MCFAs). Like all triglycerides, MCTs are composed of a glycerol backbone and three fatty acids. In the case of MCTs, 2 or 3 of the fatty acid chains attached to glycerol are medium-chain in length. Rich sources for commercial extraction of beneficial MCTs include palm kernel oil and coconut oil.

## EMULSIFIERS

Emulsifiers are characterized by the important property of being soluble both in water and in fat. Emulsifiers generally consist of a fat-soluble part and a water-soluble part. They are always used when water and oil must be made into a stable, homogeneous mixture. Suitable emulsifiers that are used in the food processing industry are selected from: ascorbyl palmitate (E 304) lecithin (E 322) phosphoric acid (E 338) sodium phosphate (E 339) potassium phosphate (E 340) calcium phosphate (E 341) magnesium orthophosphate (E 343) propylene glycol alginate (E 405) polyoxyethylene(8)stearate (E 430) polyoxyethylene stearate (E 431) ammonium phosphatides (E 442) sodium phosphate and potassium phosphate (E 450) sodium salts of edible fatty acids (E 470 a) mono- and diglycerides of edible fatty acids (E 471) acetic acid monoglycerides (E 472 a) lactic acid monoglycerides (E 472 b) citric acid monoglycerides (E 472 c) tartaric acid monoglycerides (E 472 d) diacetyltartaric acid monoglycerides (E 472 e) sugar esters of edible fatty acids (E 473) sugar glycerides (E 474) polyglycerides of edible fatty acids (E 475) polyglycerol-polyricinoleate (E 476) propylene glycol esters of edible fatty acids (E 477) sodium stearoyllactylate (E 481) calcium stearoyl-2-lactylate (E 482) stearyl tartrate (E 483) sorbitan monostearate (E 491) stearic acid (E 570).
The preferred emulsifiers forming compound (c) represent polysaccharides, such as for example gum Arabic or starch derivatives. The preferred starch derivative is starch octenyl succinate.

## REFRACTIVE INDEX MODIFIERS

Refractive index modifiers increase the difference between aqueous and non-aqueous phase thus causing a clouding effect. The preferred refractive index modifier forming compound (d) is a glycerol ester of wood rosin.

## COMPOSITIONS

In a preferred embodiment of the present invention the compositions comprise the compounds (a) to (d) in the following amounts:

(a) about 5 to about 20 wt. % and preferably about 8 to about 15 wt. % essential oils;

(b) about 5 to about 20 wt. % and preferably about 8 to about 15 wt. % lipids;

(c) about 1 to about 15 wt. % and preferably about 10 to about 15 wt. % emulsifiers; and

(d) about 1 to about 9 wt. % and preferably about 2 to about 4 wt. % refractive index modifiers which is a glycerol ester of wood resins;

on condition that the amounts add with water and additional auxiliary agents to 100 wt. %.

## FOOD COMPOSITIONS

Another object of the present invention refers to a food composition comprising or consisting of the oil-in-water emulsion indicated above, more particularly to a food composition comprising said emulsion in amounts of about 0.05 - 10 wt. %, preferably in amounts of from about 0.05 - 5.0 wt. % and even more preferred in amounts of from about 0.1-0.5 wet. %.

Food compositions according to the invention are any preparations or compositions which are suitable for consumption and are used for nutrition or enjoyment purposes, and are generally products which are intended to be introduced into the human or animal oral cavity, to remain there for a certain time and then either be eaten (e.g. ready-to-eat foodstuffs or feeds, see also herein below) or removed from the oral cavity again (e.g. chewing gums). Such products include any substances or products which in the processed, partially processed or unprocessed state are to be ingested by humans or animals. They also include substances which are added to orally consumable products during their manufacture, preparation or treatment and which are intended to be introduced into the human or animal oral cavity.

The food compositions according to the invention also include substances which in the unchanged, treated or prepared state are to be swallowed by a human or animal and then digested; in this respect, the orally consumable products according to the invention also include casings, coatings or other encapsulations which are to be swallowed at the same time or which may be expected to be swallowed. The expression "orally consumable product" covers ready-to-eat foodstuffs and feeds, that is to say foodstuffs or feeds that are already complete in terms of the substances that are important for the taste. The expressions "ready-to-eat foodstuff" and "ready-to-eat feed" also include drinks as well as solid or semi-solid ready-to-eat foodstuffs or feeds. Examples which may be mentioned are frozen products, which must be thawed and heated to eating temperature before they are eaten. Products such as yoghurt or ice-cream as well as chewing gums or hard caramels are also included among the ready-to-eat foodstuffs or feeds.

Preferred food compositions according to the invention also include "semi-finished products". Within the context of the present text, a semi-finished product is to be understood as being an orally consumable product which, because of a very high content of flavourings and taste-imparting substances, is unsuitable for use as a ready-to-eat orally consumable product (in particular foodstuff or feed). Only by mixing with at least one further constituent (e.g. by reducing the concentration of the flavourings and taste-imparting substances in question) and optionally further process steps (e.g. heating, freezing) is the semi-finished product converted into a ready-to-eat orally consumable product (in particular foodstuff or feed).

In a particular preferred embodiment of the present invention, the food composition is a beverage, particularly a juice or lemonade.

The food products may also comprise auxiliary agents, such as for example aroma or flavouring compounds, sweeteners, thickening agents, food grade acids, acid regulators, vitamins, food colorants and the like as illustrated in more detail in the following:

## AROMA OR FLAVOURING COMPOUNDS

The food compositions may also contain aroma or flavouring compounds. Aroma compounds and flavouring agents (component d) are well known in the art can be added to the flavour compositions of the invention. These flavouring agents can be chosen from synthetic flavouring liquid and/or oils derived from plants leaves, flowers, fruits and so forth, and combinations thereof. Representative flavouring liquids include: artificial, natural or synthetic fruit flavours such as eucalyptus, lemon, orange, banana, grape, lime, apricot and grapefruit oils and fruit essences including apple, strawberry, cherry, orange, pineapple and so forth; bean and nut derived flavours such as coffee, cocoa, cola, peanut, almond and so forth; and root derived flavours such as licorice or ginger.

The flavouring agent is preferably selected from the group consisting of essential oils and extracts, tinctures and balsams, such as, for example, anisole, basil oil, bergamot oil, bitter almond oil, camphor oil, citronella oil, lemon oil; Eucalyptus citriodora oil, eucalyptus oil, fennel oil, grapefruit oil, camomile oil, spearmint oil, caraway oil, lime oil, mandarin oil, nutmeg oil (in particular nutmeg blossom oil = maces oil, mace oil), myrrh oil, clove oil, clove blossom oil, orange oil, oregano oil, parsley (seed) oil, peppermint oil, rosemary oil, sage oil (clary sage, Dalmatian or Spanish sage oil), star aniseed oil, thyme oil, vanilla extract, juniper oil (in particular juniper berry oil), wintergreen oil, cinnamon leaf oil; cinnamon bark oil, and fractions thereof, or constituents isolated therefrom.

It is of particular advantage if the flavoured composition according to the invention comprises at least one flavouring agent, preferably two, three, four, five, six, seven, eight or more flavouring agents chosen from the following group: menthol (preferably I-menthol and/or racemic menthol), anethole, anisole, anisaldehyde, anisyl alcohol, (racemic) neomenthol, eucalyptol (1,8-cineol), menthone (preferably L-menthone), isomenthone (preferably D-isomenthone), isopulegol, menthyl acetate (preferably L-menthyl acetate), menthyl propionate, carvone (preferably (-)-carvone, optionally as a constituent of a spearmint oil), methyl salicylate (optionally as a constituent of a wintergreen oil), eugenol acetate, isoeugenol methyl ether, beta-homocyclocitral, eugenol, isobutyraldehyde, 3-octanol, dimethyl sulfide, hexanol, hexanal, trans-2-hexenal, cis-3-hexenol, 4-terpineol, piperitone, linalool, 8-ocimenyl acetate, isoamyl alcohol, isovaleraldehyde, alpha-pinene, beta-pinene, limonene (preferably D-limonene, optionally as a constituent of an essential oil), piperitone, trans-sabinene hydrate, menthofuran, caryophyllene, germacrene D, cinnamaldehyde, mint lactone, thymol, gamma-octalactone, gamma-nonalactone, gamma-decalactone, (1,3E,5Z)-undecatriene, 2-butanone, ethyl formate, 3-octyl acetate, isoamyl isovalerate, cis- and trans-carvyl acetate, p-cymol, damascenone, damascone, cis-rose oxide, trans-rose oxide, fenchol, acetaldehyde diethyl acetal, 1-ethoxyethyl acetate, cis-4-heptenal, cis-jasmone, methyl dihydrojasmonate, 2'-hydroxypropiophenone, menthyl methyl ether, myrtenyl acetate, 2-phenylethyl alcohol, 2-phenylethyl isobutyrate, 2-phenylethyl isovalerate, geraniol, nerol and viridiflorol.

In particular preferred aroma or flavouring compounds encompass menthol, cineol, eugenol, thymol, cinnamic aldehyde, peppermint oil, spearmint oil, eucalyptus oil, thyme oil, cinnamon oil, clove oil, spruce needle oil, fennel oil, sage oil, aniseed oil, star anise oil, chamomile oil, and caraway oil, and their mixtures.

## SWEETENERS

The food compositions may also contain sweeteners. The term "sweeteners" here denotes substances having a relative sweetening power of at least 25, based on the sweetening power of sucrose (which accordingly has a sweetening power of 1). Sweeteners to be used in an orally consumable product (in particular foodstuff) according to the invention are preferably non-cariogenic and/or have an energy content of not more than 5 kcal per gram of the orally consumable product.

Advantageous sweeteners in a preferred orally consumable product (in particular foodstuff, feed or medicament) according to the invention are selected from the following groups:

**Naturally occurring sweeteners,** preferably selected from the group comprising

(i) miraculin, monellin, mabinlin, thaumatin, curculin, brazzein, pentaidin, D-phenylalanine, D-tryptophan, and extracts or fractions obtained from natural sources, comprising those amino acids and/or proteins, and the physiologically acceptable salts of those amino acids and/or proteins, in particular the sodium, potassium, calcium or ammonium salts;

(ii) i) neohesperidin dihydrochalcone, naringin dihydrochalcone, stevioside, steviolbioside, rebaudiosides, in particular rebaudioside A, rebaudioside B, rebaudioside C, rebaudioside D, rebaudioside E, rebaudioside F, rebaudioside G, rebaudioside H, dulcosides and rubusoside, suavioside A, suavioside B, suavioside G, suavioside H, suavioside I, suavioside J, baiyunoside 1, baiyunoside 2, phlomisoside 1, phlomisoside 2, phlomisoside 3 and phlomisoside 4, abrusoside A, abrusoside B, abrusoside C, abrusoside D, cyclocaryoside A and cyclocaryoside I, osladin, polypodoside A, strogin 1, strogin 2, strogin 4, selligueain A, dihydroquercetin 3-acetate, perillartin, telosmoside $A_{15}$, periandrin I-V, pterocaryosides, cyclocaryosides, mukuroziocides, trans-anethole, trans-cinnamaldehyde, bryosides, bryonosides, bryonodulcosides, carnosiflosides, scandenosides, gypenosides, trilobatin, phloridzin, dihydroflavanols, hematoxylin, cyanin, chlorogenic acid, albiziasaponin, telosmosides, gaudichaudioside, mogrosides, mogroside V, hernandulcins, monatin, phyllodulcin, glycyrrhetinic acid and derivatives thereof, in particular glycosides thereof such as glycyrrhizine, and the physiologically acceptable salts of those compounds, in particular the sodium, potassium, calcium or ammonium salts;

(iii) extracts or concentrated fractions of the extracts, selected from the group comprising thaumatococcus extracts (katamfe plant), extracts from *Stevia* ssp. (in particular *Stevia rebaudiana*), swingle extracts (*Momordica* or *Siratia grosvenorii,* Luo-Han-Guo), extracts from *Glycerrhyzia* ssp. (in particular *Glycerrhyzia glabra*), extracts from *Rubus* ssp. (in particular *Rubus suavissimus*), citrus extracts and extracts from *Lippia dulcis*;

**Synthetic sweet-tasting substances,** preferably selected from the group comprising magap, sodium cyclamate or other physiologically acceptable salts of cyclamic acid, acesulfame K or other physiologically acceptable salts of acesulfame, neohesperidin dihydrochalcone, naringin dihydrochalcone, saccharin, saccharin sodium salt, aspartame, superaspartame, neotame, alitame, advantame, perillartin, sucralose, lugduname, carrelame, sucrononate and sucrooctate.

**FOOD GRADE ACIDS**

The food compositions may also contain carboxylic acids suitable for consumption ("food grade acids"). Acids in the sense of the invention are preferably acids permitted in foodstuffs, especially those stated here:

E 260 - acetic acid

E 270 - lactic acid

E 290 - carbon dioxide

E 296 - malic acid

E 297 - fumaric acid

E 330 - citric acid

E 331 - sodium citrate

E 332 - potassium citrate

E 333 - calcium citrate

E 334 - tartaric acid

E 335 - sodium tartrate

E 336 - potassium tartrate

E 337 - sodium-potassium tartrate

E 338 - phosphoric acid

E 353 - metatartaric acid

E 354 - calcium tartrate

E 355 - adipic acid

E 363 - succinic acid

E 380 - triammonium citrate

E 513 - sulphuric acid

E 574 - gluconic acid

E 575 - glucono-delta-lactone

**ACID REGULATORS**

The food compositions may also contain acid regulators. Acid regulators are food additives that keep the acidity or basicity and thus the desired pH of a foodstuff constant. They are generally organic acids and salts thereof, carbonates, less often also inorganic acids and salts thereof. Addition of an acid regulator partly intensifies the stability and strength of the foodstuff, brings about desirable precipitation and improves the action of preservatives. In contrast to acidifiers,, they are not used for altering the taste of foodstuffs. Their action is based on the formation of a buffer system in the foodstuff, so that addition of acidic or basic substances has little or no effect on the pH value. Examples are:

E 170 - calcium carbonate

E 260-263 - acetic acid and acetates

E 270 - lactic acid

E 296 - malic acid

E 297 - fumaric acid

E 325-327 - lactates (lactic acid)

E 330-333 - citric acid and citrates

E 334-337 - tartaric acid and tartrates

E 339-341 - orthophosphates

E 350-352 - malates (malic acid)

E 450-452 - di-, tri- and polyphosphates

E 500-504 - carbonates (carbonic acid)

E 507 - hydrochloric acid and chlorides

E 513-517 - sulphuric acid and sulphates

E 524-528 - hydroxides

E 529-530 - oxides

E 355-357 - adipic acid and adipates

E 574-578 - gluconic acid and gluconates

**THICKENERS**

The food compositions may also contain thickeners. Thickeners are substances which first and foremost are able to bind water. Withdrawal of unbound water leads to an increase in viscosity. Starting from a characteristic concentration for each thickener, in addition to this effect there are also network effects, which generally lead to a disproportionate increase in viscosity. It is said in this case that molecules 'communicate' with one another, i.e. "form loops". Most thickeners are linear or branched macromolecules (e.g. polysaccharides or proteins), which can interact with one another through intermolecular interactions, such as hydrogen bridges, hydrophobic interactions or ionic bonds. Extreme cases of thickeners are sheet silicates (bentonites, hectorites) or hydrated $SiO_2$ particles , which are present dispersed as particles and can bind water in their solid-like structure or can interact with one another owing to the interactions described. Examples are:

E 400 - alginic acid

E 401 - sodium alginate

E 402 - potassium alginate

E 403 - ammonium alginate

E 404 - calcium alginate

E 405 - propylene glycol alginate

E 406 - agar-agar

E 407 - carrageen, furcelleran

E 407 - carob kernel flour

E 412 - guar kernel flour

E 413 - tragacanth

E 414 - gum arabic

E 415 - xanthan

E 416 - karaya (Indian tragacanth)

E 417 - tara kernel flour (Peruvian carob kernel flour)

E 418 - gellan

E 440 - pectin, opecta

E 440ii - amidated pectin

E 460 - microcrystalline cellulose, cellulose powder

E 461 - methylcellulose

E 462 - ethylcellulose

E 463 - hydroxypropylcellulose

E 465 - methylethylcellulose

E 466 - carboxymethylcellulose, sodium carboxymethylcellulose

Advantageous thickeners according to the invention are selected from the group comprising: crosslinked polyacrylic acids and derivatives thereof, polysaccharides and derivatives thereof, such as xanthan gum, agar-agar, alginates or tyloses, cellulose derivatives, for example carboxymethylcellulose or hydroxycarboxymethylcellulose, fatty alcohols, monoglycerides and fatty acids, polyvinyl alcohol and polyvinylpyrrolidone

## VITAMINS

In another embodiment of the present invention the compositions may also include vitamins. Vitamins have diverse biochemical functions. Some have hormone-like functions as regulators of mineral metabolism (e.g., vitamin D), or regulators of cell and tissue growth and differentiation (e.g., some forms of vitamin A). Others function as antioxidants (e.g., vitamin E and sometimes vitamin C). The largest number of vitamins (e.g. B complex vitamins) act as precursors for enzyme cofactors, that help enzymes in their work as catalysts in metabolism. In this role, vitamins may be tightly bound to enzymes as part of prosthetic groups: For example, biotin is part of enzymes involved in making fatty acids.
Vitamins may also be less tightly bound to enzyme catalysts as coenzymes, detachable molecules that function to carry chemical groups or electrons between molecules. For example, folic acid carries various forms of carbon group-methyl, formyl, and methylene - in the cell. Although these roles in assisting enzyme-substrate reactions are vitamins' best-known function, the other vitamin functions are equally important. In the course of the present invention suitable vitamins are selected from the group consisting of

- Vitamin A (retinol, retinal, beta carotene),

- Vitamin $B_1$ (thiamine),

- Vitamin $B_2$ (riboflavin),

- Vitamin $B_3$ (niacin, niacinamide),

- Vitamin $B_5$ (panthothenic acid),

- Vitamin $B_6$ (pyridoxine, pyridoxamine, paridoxal),

- Vitamin $B_7$ (biotin),

- Vitamin $B_9$ (folic acid, folinic acid),

- Vitamin $B_{12}$ (cyanobalamin, hydoxycobalmin, methylcobalmin),

- Vitamin C (ascorbic acid),

- Vitamin D (cholecalciferol),

- Vitamin E (tocopherols, tocotrienols), and

- Vitamin K (phyolloquinone, menaquinone).

The preferred vitamins are ascorbic acid and tocopherols. Said vitamins may be present in the food composition in amounts of about 0.1 to about 5 % b.w., and preferably about 0.5 to about 1 % b.w.

## FOOD COLORANTS

The food compositions may also contain colorants. Food colorants or simply colorants are food additives for colouring foodstuffs. Colorants are divided into the groups of the natural colorants and the synthetic colorants. The nature-identical colorants are also of synthetic origin. The nature-identical colorants are synthetic copies of colouring substances occurring in nature. Suitable colorants for use in the present composition are selected from: curcumin, E 100 riboflavin, lactoflavin, vitamin B2, E 101 tartrazine, E 102 quinoline yellow, E 104 yellow-orange S, yellow-orange RGL, E 110 cochineal, carminic acid, true carmine, E 120 azorubin, carmoisin, E 122 amaranth, E 123 cochineal red A, ponceau 4 R, victoria scarlet 4 R, E 124 erythrosin, E 127 allura red AC, E 129 patent blue V, E 131 indigotin, indigo carmine, E 132 brilliant FCF, patent blue AE, amide blue AE, E 133 chlorophyll, chlorophylline, E 140 copper complex of chlorophyll, copper-chlorophyllin complex, E 141 brilliant acid green, green S, E 142 caramel sugar couleur, E 150 a sulphite lye-caramel, E 150 b ammonia caramel, E 150 c ammonium sulphite-caramel, E 150 d brilliant black FCF, brilliant black PN, black PN, E 151 vegetable charcoal, E 153 brown FK, E 154 brown HT, E 155 carotene, carotene, E 160 a annatto, bixin, norbixin, E 160 b capsanthin, capsorubin, E 160 c lycopene, E 160 d beta-apo-8'-carotenal, apocarotenal, beta-apocarotenal, E 160 e beta-apo-8'-carotene acid ethyl ester (C30), apocarotene ester, beta-carotene acid ester, E 160 f lutein, xanthophyll, E 161 b canthaxanthine, E 161 g betanin, beet red, E 162 anthocyan, E 163 calcium carbonate, E 170 titanium dioxide, E 171 iron oxides, iron hydroxides, E 172 aluminium, E 173 silver, E 174 gold, E 175 lithol-rubin BK, ruby pigment BK, E 180.

## INDUSTRIAL APPLICATION

Another object of the present invention concerns a method for increasing turbidity and improving storage stability of an oil-in-water emulsion by adjusting

(i) the average particle size x(50) of the oil droplets in said emulsion to a value of from about 0.1 to about 0.6 $\mu$m and/or
(ii) the difference between the particles size x(90) minus the particle size x(10) to a value less than about 0.8 $\mu$m,

as described in claim 11.

Finally, the invention also encompasses the use of the emulsion as claimed above for preparing a turbid beverage with improved storage stability.

**EXAMPLES**

**GENERAL PROCEDURE**

In the course of the present invention, different sets of experiments were performed. A standard beverage emulsion based on gum Arabic and MCT (= mid chain triglyceride, obtained from Cremer Oleo, Hamburg) was prepared. Trials were done to measure the impact of particle size and particle amount on turbidity. By incorporation of glycerol ester of wood rosin into the oil-phase of the emulsion, the impact of weighting agent on the refractive index and, thus, on turbidity was examined. A comparison between deionized water and a beverage test solution (10°Brix, pH 2.6) as continuous phase was done to determine whether the composition of the continuous phase has an impact on turbidity. The preparation of MCT-emulsions with different emulsifiers was performed to examine whether the emulsifier affects the refractive index of the dispersed phase and therefore affects the turbidity. Finally, a sensory analysis was performed to compare the instrumental turbidity readings with human visual perception.

**STANDARD PROCEDURE FOR EMULSION PREPARATION**

A standard emulsion was prepared by dissolving gum Arabic (13.5 %w/w) and preservatives in water with RW20DZM agitator with R 1302 dissolver stirrer (IKA®-Werke GmbH & Co. KG, Staufen, Germany) and left over night for hydration. MCT (7.15 % w/w) was gradually added to the continuous phase while mixing with Ultra-Turrax T50 with dispersion unit S50N (IKA®-Werke GmbH & Co. KG, Staufen, Germany) at 6000 rpm for 5 minutes to generate a pre-emulsion (PE). The PE was left at least two hours for deaeration before homogenization with a laboratory table top model homogenizer NS1001L2K (GEA Niro Soavi S.p.A., Parma, Italy). Unless stated otherwise, homogenization was done in three cycles in a two stage process at 20/5 MPa. Dilutions for analytical purposes were made with deionized water.

**SPECIFIC VARIATIONS IN EMULSION PREPARATION**

To analyse the impact of particle size on turbidity emulsions with similar oil content but different particle size distributions had to be prepared. This was achieved by varying the homogenization pressure during emulsification. A first sample was taken after preemulsification. The PE was then divided into four equal portions, which were homogenized in three cycles at varying pressures (8/3 MPa, 20/5 MPa, 35/5 MPa, 50/5 MPa). At each pressure stage a sample was taken. A dilution of the respective emulsion (0.2 %) was prepared for each sample prior to turbidity analysis and particle size measurement.

At constant oil content, with a decreasing particle size, the amount of oil droplets, i.e. light scattering particles, increases significantly. To evaluate whether these two impact factors can be separated from each other, particle count calculations were done for two emulsions from the previous trial. The aim was to prepare emulsions with the same amount of oil droplets, but distinct difference in the particle size distribution to investigate the effect of particle size on turbidity. Calculations were performed using the PE (for this trial called coarse emulsion, CE) and the corresponding standard emulsion (fine emulsion, FE). However, the calculation of the particle amount via the surface weighted mean diameter revealed that CE must be dosed at a concentration, which is 1230 fold higher than the concentration of the FE to include the same amount of particles. Since this is physically impossible an approximation was investigated by diluting both emulsions in ascending concentration (0.1%w/w, 0.4 %w/w, 0.7 %w/w, 1%w/w, 2%w/w and 3%w/w) to monitor and compare the differences in the increase of turbidity.

To determine the impact of the continuous phase on the turbidity, the samples from CE and FE from above were also prepared in a beverage model solution (CET and FET) with 10°Brix and pH 2.6, prepared from 72.7 °Brix inverted sugar syrup and 1.1 % citric acid.

Whether a weighting agent has an impact on turbidity was evaluated by comparing the standard emulsion with an emulsion with weighting agent incorporated in different oil phases. 30 % w/w of a typical weighting agent (glycerol ester of wood rosin) was dissolved into MCT oil (MCTW) and orange oil (OOW) respectively on a magnetic stirrer hot plate IKA® C-MAG HS7 (IKA®-Werke GmbH & Co. KG, Staufen, Germany) while heating up to 85°C and 70°C respectively. Preparation of a standard emulsion using orange oil without weighting agent was not possible due to stability issues. Density and refractive index of the respective oil phase was measured before homogenization. As densities for the different oil phases differed quite remarkably, emulsion formulas were adjusted to a similar volume of the oil phase (7.5 %v/w) rather than a similar weight, which appears to be more correct in terms of turbidity and light scattering. In order to achieve emulsions with similar particle size distribution homogenization conditions had to be optimized. As a consequence homogenization pressure had to be adjusted to 35/5 MPa for the emulsion with weighted MCT-oil. For the three emulsions dilutions of 0.1%w/w, 0.4%w/w, 0.7%w/w, 1%w/w, 2% w/w and 3%w/w were made to measure turbidity.

To determine whether the emulsifier has an impact on the turbidity of an oil-in-water emulsion, emulsions with different emulsifier, but similar particle size distribution and oil load had to be prepared. Apart from GA as classical emulsifier for food grade emulsions, octenyl-succinate derivatized starch (OSA), WPC (80 %) and extract from *Quillaja saponaria Molina* (65 - 90 % saponine, Q) were used. Dosage of each emulsifier was chosen according to the suppliers' recommendation. As WPC-based emulsions were not stable under acidic conditions for a prolonged period of time all emulsions were prepared without preservatives and all analysis were done on the day of preparation. In order to achieve emulsions with similar particle size distribution, formulation and/or homogenization procedure had to be adjusted (see **Table 1**). Dosage for turbidity measurement had been back calculated from the respective formulations to obtain the same oil load (w/w) for all emulsions.

**Table 1**

| Composition and process conditions for the preparation of emulsions with standardized oil droplet size distribution using different emulsifiers (whey protein concentrate 82 % (WPC), Quillaja-extract (Q), octenyl-succinate derivatized starch (OSA) and gum Arabic (GA)) | | | | |
|---|---|---|---|---|
| | **WPC** | **Q** | **OSA** | **GA** |
| Emulsifying agent [g] | 16.70 | 23.33 | 88.80 | 101.25 |
| MCT oil [g] | 78.95 | 88.50 | 70.90 | 70.90 |
| Water [g] | 389.76 | 374.25 | 375.00 | 375.00 |
| Homogenization pressure (MPa) | 25/5 | 50/5 | 20/5 | 50/5 |
| Number of passes | 4 | 4 | 4 | 4 |

## PHYSICAL CHARACTERIZATION OF THE EMULSIONS

For turbidity measurement emulsions were diluted as outlined above and left to settle for approx. 30 minutes prior to turbidity measurement. A scratch-free cuvette was first washed with deionized water followed by the sample to be measured. Turbidity was measured using a 2100AN IS laboratory turbidimeter DIN EN ISO 27027:2000-04 compatible with infrared light source at 870 nm ± 30 LED (Hach Lange GmbH, Berlin, Germany) with 25mm round cuvette, 30mL.

Refractive index (RI) was measured using a digital refractometer (RX-5000, ATAGO CO., LTD., Tokyo, Japan; accuracy of measurement (nD): 0.00004, LED wavelength: 589 nm, prism: sapphire) at 20°C. Measurements were done in triplicate. Density was measured using a temperature controlled flexural resonator DMA 4500 Density Meter (Anton Paar GmbH, Graz, Austria) at 20°C.

METTLER TOLEDO S220 SevenCompact™ pH - meter was used to measure the pH of the beverage test solution (Mettler-Toledo Intl. Inc, Greifensee, Switzerland).

Particle size characterization was done via laser diffraction method using MALVERN a Mastersizer 2000 equipped with a dispersion unit Hydro 2000S (both Malvern Instruments Ltd, Worcestershire, UK). For each sample five measurements were made using the following parameters: pump speed was set at 2000 rpm, measurement delay was 2 seconds, measurement time was 10 seconds and 10,000 snaps were taken. For emulsions with different oil phase trials were undertaken to optimize optical parameters. The instrument software provides two quality parameters of the data fit. Optimization means that similar and low values for the residuals and the weighted residuals should be achieved as these parameters indicate the correctness of the distribution calculation. For emulsions with MCT the RI is 1.45 and absorption is 0.001 for both blue and red laser. For MCTW red laser only measurement was chosen due to strong absorbance of the ester gum; the RI is 1.47 and abs. is 0.001. OOW emulsion is as well measured with red laser only; the RI is 1.49. Particle laser diffraction measurement was undertaken and reported following ISO 13320:2009 and ISO 9276-2:2014.

## SENSORY ANALYSIS OF THE EMULSIONS

In total 22 tests were undertaken to quantify the difference in turbidity perceivable for the panellists at turbidity levels ranging from 100 - 9500 NTU (ratio). Three ranges of turbidity were chosen. Tests at a turbidity of 100 - 250 NTU (ratio) represented the low turbidity range, 900- 1500 NTU (ratio) the medium turbid range and test performed at turbidity values above 3000 NTU (ratio) represented the high turbidity range. In each turbidity range the samples were chosen at random with turbidity differences defined by best estimate. In case all samples were judged significantly different, turbidity differences were gradually decreased for the following evaluation until samples could not be differentiated any more by the panelists. In case differences were not detected, turbidity differences between samples were gradually increased until the limits for distinction of visual human perception had been identified.

For all sensory tests dilutions of the standard emulsion were used. Dosage for specific turbidity samples were determined and calculated by five point calibration and linear regression. Dilutions from 0.1 % w/w to 6.7 % w/w resulted in turbidity from 110 to 9450 NTU (ratio). Turbidity was controlled for each sample via turbidity measurement as described above. The sample solution was filled into 15 mL screw cap bottles. Sensory analysis was undertaken according to DIN ISO 8587:2010-08 (Sensory analysis - Methodology - Ranking).

According to availability of panellists, sets of three to five samples coded with random numbers in random order were presented in complete block design in a dedicated sensory room with blinded windows and daylight imitating illumination. The room was set up according to DIN 10962:1997-10 (Areas for sensory analysis - Specifications of test rooms). The panel consisted of 23 untrained fellow employees aged 18 to 58 years who self-reported normal or corrected to normal vision. The panel was instructed to rank the samples ascending according to turbidity. Rank 1 being the least turbid, rank 2 more turbid and so forth. The panellists were told to touch the bottle only at the black lid to avoid finger prints on the glass. In case no difference could be detected the panellist had to make a decision on the rank but left a comment. The aim was to rank samples based on the intensity of a single attribute, in this case turbidity. For evaluation rank data were calculated for each sample. In case of tied ranks the mean of both ranks was given to each of the tied ranks. The value of Friedman - Test (F) was computed to determine if there were any differences among the samples.

For complete block design, F was calculated according to Equation (1). In case of tied ranks F was corrected to F' (Equations 2 and 3)):

$$(1) \qquad F = \frac{12}{(n*k*(k+1))} * (R_1^2 + R_2^2 + \cdots + R_k^2) - 3 * n * (k+1)$$

with $n$ giving the number of panellists, $k$ giving the number of samples and $R_{1-k}$ being the rank sum of the respective sample;

$$(2) \qquad F' = \frac{F}{1 - \frac{E}{\{n*k*(k^2-1)\}}}$$

with

$$(3) \qquad E = (t_1^3 - t_1) + (t_2^3 - t_2) + \cdots + (t_i^3 - t_i)$$

with $t_{1-i}$: number of tied ranks. In the case $F_{Test}$ was higher than F (value for F can be extracted from a table given in ISO 8587:2006), with the chosen level of significance, there were significant differences at least between two samples.

The least significant difference (LSD) between two samples, with the chosen risk ($\alpha = 0.05$) was calculated according to Equation (4):

$$(4) \qquad LSD = 1.96 \sqrt{\frac{n*k*(k+1)}{6}}$$

with $n$ giving the number of panellists and $k$ giving the number of samples. In case the difference in rank sums was as large as or larger than the LSD-value, the samples were considered to be significantly different.

**RESULTS AND DISCUSSION**

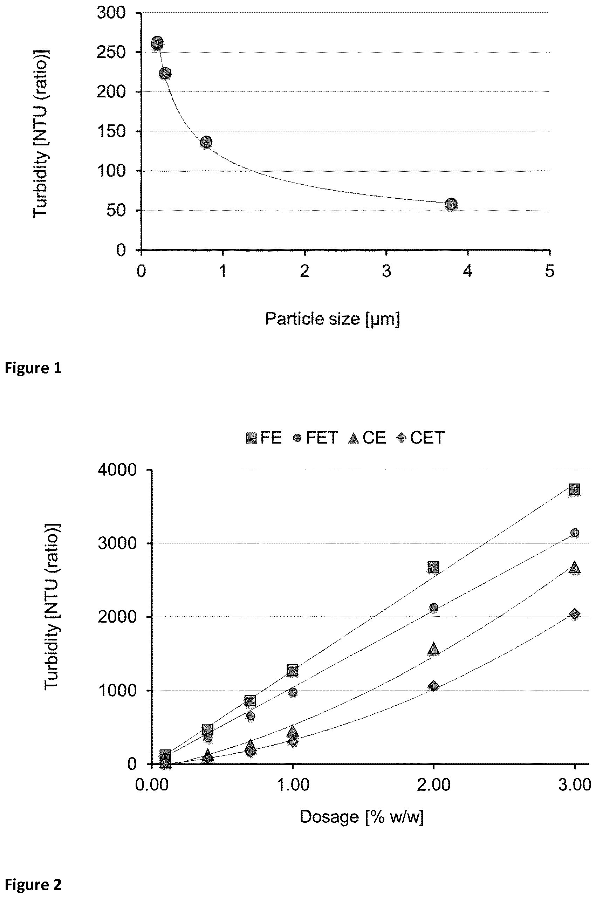

The impact of particle size on the turbidity of an oil-in-water emulsion is visualized in **Figure 1.** The corresponding results from particle size analysis are given for all examined emulsions in **Table 2.**

**Table 2**

| Particle size distribution results for the different emulsions used for analysis | | | | | |
|---|---|---|---|---|---|
| **Parameter** | **Pressure [MPa]** | $x_{90,3}$ **[μm]** | $x_{50,3}$ **[μm]** | $x_{10,3}$ **[μm]** | $\overline{x}_{1,2}$ **[μm]** |
| Particle size | PE | 7.8 ± 0.11 | 4.4 ± 0.07 | 2.4 ± 0.04 | 3.8 ± 0.06 |
| | 3*8/3 | 1.8 ± 0.03 | 0.9 ± 0.02 | 0.4 ± 0.01 | 0.8 ± 0.02 |
| | 3*20/5 | 0.7 ± 0.00 | 0.4 ± 0.00 | 0.2 ± 0.00 | 0.3 ± 0.00 |
| | 3*35/5 | 0.5 ± 0.01 | 0.3 ± 0.00 | 0.2 ± 0.00 | 0.2 ± 0.00 |
| | 3*50/5 | 0.4 ± 0.00 | 0.3 ± 0.00 | 0.1 ± 0.00 | 0.2 ± 0.00 |
| Particle count/ cont. phase | CE | 6.7 ± 0.2 | 3.9 ± 0.00 | 2.2 ± 0.06 | 3.4 ± 0.06 |
| | FE | 0.7 ± 0.00 | 0.4 ± 0.00 | 0.2 ± 0.00 | 0.3 ± 0.00 |
| Weighting agent | MCT | 0.7 ± 0.00 | 0.4 ± 0.00 | 0.2±0.00 | 0.3 ± 0.00 |
| | MCT_w | 1.2 ± 0.00 | 0.4 ± 0.00 | 0.2±0.00 | 0.4 ± 0.00 |
| | OO_w | 0.6 ± 0.02 | 0.3 ± 0.00 | 0.1 ± 0.01 | 0.2 ± 0.00 |
| Emulsifier | GA | 0.5 ± 0.00 | 0.3 ± 0.00 | 0.2±0.00 | 0.3 ± 0.00 |
| | OSA | 0.9 ± 0.00 | 0.4 ± 0.00 | 0.2±0.00 | 0.4 ± 0.00 |
| | WPC | 0.6 ± 0.00 | 0.3 ± 0.00 | 0.1 ± 0.00 | 0.2 ± 0.00 |
| | Q | 0.6 ± 0.00 | 0.3 ± 0.00 | 0.2±0.00 | 0.3 ± 0.00 |

An exponential relationship between the decrease in particle size with the increase in turbidity exists. The exponential regression for the mean volume-surface particle diameter $\overline{x}_{1,2}$ is given by Equation (5):

$$(5) \qquad \bar{x}_{1,2}: y = 117.04x^{-0.512},$$

with $R^2$ = 0.998 . The exponential regression results from the fact that scattering as the most important parameter determining turbidity, is not only affected by the number of particles, but also their size.

Turbidity together with the absorption determines the extinction coefficient of a sample. The intensity, polarization, angular distribution, and fine structure of the scattered radiation are determined by the number of particles, their size, shape, optical constants, and interactions of the molecules in the scattering material. Therefore $\alpha$ can be described with Equation (6) as:

$$(6) \qquad \alpha = N\pi R^2 Q$$

where $N$ is the number of droplets per unit volume, $R$ is the droplet radius and $Q$ is the scattering efficiency. Furthermore oil droplet size also affects the scattering efficiency.

The scattering efficiency is a function of the wave length of light, the particle radius, the real and the imaginary part of the complex refractive index and the angle of observation $\vartheta$ as shown in Equation (7):

$$(7) \qquad Q = f(\lambda, R, n, k, \theta)$$

In addition, looking at **Figure 1** it appears that for the given sample emulsion the increase in turbidity levels off and maximum turbidity is reached when the volume - surface mean diameter is 0.2 μm. This is in agreement with previous studies, e.g. for weighted orange oil emulsion maximum turbidity readings were found for mean particle radius of 0.3 μm and for uniform latex particles of about 0.6 μm. The propagation of light is highly dependent on a size parameter x = $2\pi r/\lambda$. For very small particles with x << 1 Rayleigh scattering is applied (valid for particles about one tenth of the size of the wavelength. In this case just an oscillatory dipole is induced and the medium will appear transparent.

Whereas for x ~ 1, the scattering of light can be explained with Mie's theory from 1908. This requires the solution of Maxwell's equations and the description treats the system as a strongly scattering suspension of hard spheres of high refractive index *n,* dispersed in a homogeneous medium of refractive index $n_0$. Mie concluded from his calculations that the particle diameter for which the maximum of scattering is reached is proportional to the wave length and accordingly, the maximum scattering is inversely proportional to the wave length. Thus, maximum scattering will occur for a given material, when the particles are about equal in size to the wavelength. It needs to be emphasized that all these consideration are based on the assumption of single scattering of monodispersed particles in a non-absorbing medium, which holds not true for the emulsions in the present study. However, for polydisperse systems, as in the case of an oil-in-water emulsion, it is known that the mean scattering cross section depends primarily upon the volume to surface ratio and is only weakly dependent on the shape of the size distribution function with validity to mean surface - volume diameters smaller and bigger compared with the wavelength of incident light.

It follows for the average scattering efficiency Equation (8):

$$(8) \qquad Q_{av} = \int_0^\infty Q(D) * p(D) * D^2 dD \, / \int_0^\infty p(D) * D^2 dD$$

Turbidity will then be given by Equation (9):

$$(9) \qquad \tau = \frac{3}{2} \frac{c}{\rho_m} \frac{Q_{av}}{D_{32}}$$

Therefore the mean volume-surface diameter is suitable for the characterization of polydisperse systems like the emulsions examined in the present invention.

The impact of particle amount was evaluated with an approximation via the increase in turbidity between dilution steps of one coarse and one fine emulsion from the previous trial. With increasing dosage, particle size distribution does not change, but the number of particles does. As already depicted in **Table 2,** the CE had a $\bar{x}_{1,2}$ of 3.4 μm and FE had a $\bar{x}_{1,2}$ of 0.3 μm. Further the CE had a $x_{10,3}$ of 2.2 μm and the FE had a $x_{90,3}$ of 0.7 μm, which means that the particle size distributions did not overlap. **Figure 2** shows the correlation between the dilution of the cloud (concentration) and turbidity for CE and FE respectively. The intercept was set to zero, because there will not be turbidity without added emulsion.

As the instrument for turbidity measurement is calibrated linear according to Formazin standard concentration, it would be assumed to likewise detect a linear correlation for these oil-in-water emulsions as is the case for FE with a coefficient of determination of $R^2 = 0.997$. For CE on the other hand a polynomial correlation of second order is found with $R^2 = 0.995$. The corresponding regressions are given in Table 3. It can clearly be seen that the total turbidity is much higher for FE, as discussed above. For 0.1% dosage turbidity is $30 \pm 0.21$ NTU (ratio) for the coarse emulsion as opposed to $113 \pm 0.58$ NTU (ratio) for the fine emulsion which is the 3.7 fold. This demonstrates the impact of particle size, as the particle size distribution of FE induces maximum scattering, whereas the scattering efficiency of the much bigger particles of CE is lower. The increase in turbidity on the other hand is steeper for CE due to the polynomial opposed to linear correlation whereas much more particles are added to FE. The impact of particles size on turbidity can possibly not be observed separated from the particle size in beverage emulsions. But it can be observed that the scattering of bigger particles is more dependent on particle concentration than small particles. This might be due to the fact that the size parameter becomes >>1 for CE and Mie theory is extended to geometrical optical laws.

Furthermore **Figure 2** shows the impact of the composition of the continuous phase on turbidity. In a beverage model solution the increase in turbidity follows, as well as for FE and CE, a linear correlation for FET ($R^2 = 0.998$) and a polynomial correlation for CET ($R^2 = 0.999$), but total turbidity is lower than in systems with water as continuous phase. This effect can be explained with the increase in RI of the continuous phase (see **Table 3**).

**Table 3**

| Regression for the pre-emulsion (CE) and corresponding standard emulsion (FE) in deionized water compared to preparation in beverage model solution (CET, FET, 10°Brix, pH 2.6) | | | |
|---|---|---|---|
| **Sample** | **RI(cont. phase)** | **Regression** | **$R^2$** |
| CE | 1.333 | $y = 162.1x^2 + 444.43x - 76.319$ | 0.9954 |
| CET | 1.348 | $y = 173.31x^2 + 170.99x - 16.658$ | 0.9989 |
| FE | 1.333 | $y = 1269.9x$ | 0.9972 |
| FET | 1.348 | $y = 1042.7x$ | 0.9978 |

The RI describes the phenomenon that light travels at different speeds in different media. As a consequence a beam of light is bent or refracted upon changing the speed when entering a medium with different optical properties. As a consequence in case the RI of the medium is equal to that of the solute, the RI ratio is zero and the emulsion appears transparent. In this case citric acid and inverted sugar syrup increased the RI of the continuous phase from 1.333 to 1.348 which renders the RI ratio by 0.015 and led to a decrease in turbidity by 20 %.

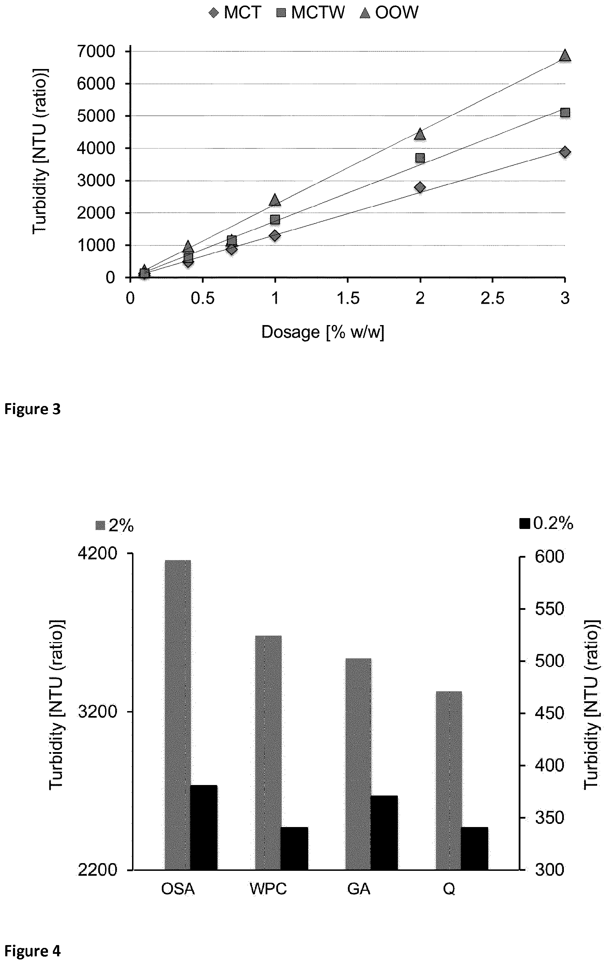

Investigating the impact of the oil phase, i.e. of the refractive index, on turbidity, all three emulsions show a linear correlation between concentration and turbidity with $R^2$ above 0.99 (**Figure 3**). From the slopes can be seen that turbidity of OOW increases 1.7 fold compared to MCT and still 1.3 fold compared to MCTW. As a consequence at low concentration in a range similar to the typical dilution of a cloud emulsion tremendous differences in turbidity occur. At 0.1 % dilution turbidity amounted to 115 $\pm$ 0.58 NTU (ratio) in MCT, 139 $\pm$ 0.00 for MCTW and 230 $\pm$ 0.58 for OOW. **Table 4** shows that the refractive index changes with the addition of 30 % weighting agent into the oil phase.

**Table 4**

| Surface weighted mean diameter $\bar{x}_{1,2}$ and refractive index (RI) of the oil phase for oil-in-water emulsions with medium chain triglyceride (MCT), MCT weighted with 30 % w/w glycerol ester of wood rosin (MCTW) and respectively weighted orange oil (OOW) | | | | |
|---|---|---|---|---|
| **Sample** | **$\bar{x}_{1,2}$ [$\mu$m]** | **RI$_{oil}$ phase** | **Linear regression** | **$R^2$** |
| MCT | 0.3 $\pm$ 0.00 | 1.45 | y = 1317.1x | 0.997 |
| MCTW | 0.4 $\pm$ 0.00 | 1.47 | y = 1744.3x | 0.996 |
| OOW | 0.2 $\pm$ 0.00 | 1.49 | y = 2263.5x | 0.993 |

The increase of the refractive index is from 1.45 to 1.47 for MCT and from 1.47 to 1.49 for orange oil. With increasing refractive index of the oil phase the difference between $RI_{.dispersed\ phase}/RI_{continuous\ phase}$ of the compared emulsions increases by 0.02 for each oil phase. As already described for the continuous phase the highest scattering efficiency was found at high RI ratios also found a significant increase in opacity for spectroscopic 1:1000 dilutions when adding EG to similar oil-in-water emulsion. As with the addition of weighting agent the RI ratio is changed more than for the continuous phase in the trials above, more pronounced results would be expected and can be found. From the slopes for the linear regressions given in Table 3 can be seen that with an increase in RI ratio by 0.02, turbidity is increased by 32 % and with an increase of RI ratio of 0.04 by 72 %.

The impact of the type of emulsifier on the turbidity is depicted in **Figure 4.** At a dilution of 0.2 % only small differences in turbidity occur. The values ranged from 340 $\pm$ 0.58 to 380 $\pm$ 0.58 NTU (ratio). In contrast, at a concentration of 2% differences in turbidity are more pronounced and ranged from 3320 $\pm$ 21.0 NTU (ratio) for Q to 4150 $\pm$ 6.8 NTU (ratio) for OSA. At both dilutions the emulsion stabilized with Quillaja extract showed the lowest turbidity and emulsions stabilized with OSA the highest turbidity. The emulsions were prepared with the same oil phase and as identically as possible. As can be seen in Table 3, the $\bar{x}_{1,2}$ ranges between 0.2 -0.4 $\mu$m and therefore all emulsions should be in the size range which induces maximum scattering effects so that the oil phase and the particle size should not be a major influencing factor. It is known from the state of the art that the refractive index of the dispersed phase may be different from that of the bulk oil. But he made as well the assumption that the thickness of the interface is small enough, relative to the wave length of the incident light, that the emulsified oil droplet behaves optically as a single dispersed phase. In the present study a possible impact of the emulsifier is rather seen at high dosages. The differences in turbidity at higher dosage can be explained by excess emulsifier, as scattering actually happens in every suspension because each molecule acts as scattering center. Also excess emulsifier, that forms micelles or aggregates in the continuous phase, might scatter weakly that the impact is therefore seen more pronounced at higher dosages. This can be derived from the chemical structure of the emulsifiers used in the present study. While the saponins in the Quillaja extract have a molecular weight of 1800 - 2000 Dalton and form micelles of approximately 15 nm, which is rather small compared to OSA ($1.2 - 2.6*10^5$ Da), WPC ($1.6*10^4-2.5*10^5$ Da) and gum Arabic ($3.1*10^5$ Dalton).

## SENSORY EVALUATION

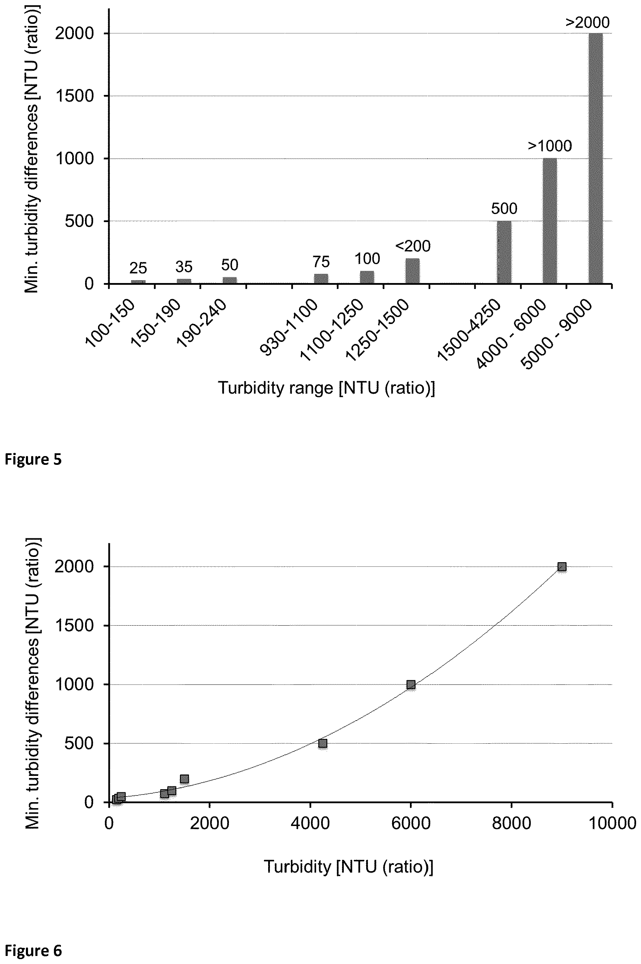

The result of the sensory evaluation clearly shows that detectable turbidity differences are dependent on the turbidity range (**Figure 5**). For each range of turbidity the minimum turbidity difference in NTU (ratio) is given, which was required to distinguish two samples significantly from each other. As can be seen, in the low turbidity range panellists were able to differentiate a difference of 25 turbidity units (TU), i.e. a sample with 125 NTU (ratio) has been perceived as significantly more turbid than a sample with 100 NTU (ratio). While the turbidimeter is calibrated linear according to concentration, the visual human perception of the sample emulsion is different for each range of turbidity. While at low turbidity an average increase of 21 - 24 % from the initial turbidity is needed to recognize a difference, at a medium turbidity level an increase of 7 % is already recognized. At a turbidity level of around 4000 NTU (ratio) it becomes more and more difficult to distinguish between samples. An increase in turbidity of more than 40 % is required to induce significant differences. But nevertheless, great values of turbidity could still be significantly distinguished and sorted according to ascending turbidity. According to Stevens' power law the subjective magnitude to an intensity of a physical stimulus is related by Equation (10):

$$(10) \qquad E = k\ (R - R_0)^n$$

With E being the subjective magnitude, R is the stimulus intensity and $R_0$ is the threshold for the given stimulus. The equation describes the results of experiments on loudness, brightness, vibration on the skin, and warmth and cold applied to the arm. In the present study no magnitude estimation was undertaken, but a ranking test to find the least differences detectable.

A correlation of the stimulus intensity (turbidity) to the minimum turbidity differences is depicted in **Figure 6.** As opposed to magnitude estimation, for the human visual perception of turbidity in beverage systems and the turbidity range investigated, a polynomial relationship can be found with $R^2 = 0.997$. For the development of products with a specific turbidity these data provide valuable information as already the turbidity measurement allows estimations of the human response. From these results can be deduced which product deviations will be undetected by consumers. On the other hand these results give indications which changes in the visual appearance need to be achieved for a specific more turbid or a specific less turbid product.

In the following a brief description of Figures 1 to 6 is provided:

Figure 1: Exponential correlation between turbidity and $\overline{x}_{1,2}$ of 0.2%w/w emulsions homogenized with increasing pressure ($y = 117.04x^{-0.512}$, $R^2=0.998$)

Figure 2: Comparison of turbidity [NTU (ratio)] between a fine ($\overline{x}_{1,2}$ 0.2 $\pm$ 0.00 $\mu$m) and a coarse ($\overline{x}_{1,2}$ = 3.4 $\mu$m) emulsion in deionized water (FE, CE) and beverage model solution (FET,CET) with 10°Brix and pH = 2.6 including linear regression for FE and FET and polynomial regression for CE and CET

Figure 3: Correlation of turbidity [NTU (ratio)] and concentration [%w/w] of oil-in-water emulsion with different oil phase (MCT = medium chain triglyceride; MCTW: MCT weighted with 30 % w/w glycerol ester of wood rosin; OOW: respectively weighted orange oil)

Figure 4: Turbidity of 0.2 % and 2 % dilutions of emulsions with different emulsifiers (OSA = octenyl succinate derivatized starch, WPC = whey protein concentrate, GA = gum Arabic, Q= Quillaja saponaria Molina extract)

Figure 5: Minimum turbidity differences between two samples for a given turbidity range detected by human visual perception

Figure 6: Relationship between minimum turbidity differences detected by human visual perception and upper turbidity value for which this difference is detectable ($y = 2E{-}05x2 + 0.0328x + 34.89$, $R^2 = 0.9976$)

**Claims**

1. A turbid oil-in-water emulsion with improved storage stability, comprising

   (a) at least one essential oil;
   (b) at least one lipid;
   (c) at least one emulsifier; and
   (d) at least one glycerol ester of wood rosin,
   wherein

   (i) the average particle size x(50) of the oil droplets in said emulsion ranges from 0.1 to 0.6 $\mu$m and/or
   (ii) the difference between the average particle size x(90) and the average particle size x(10) is less than 0.8 $\mu$m, and

wherein

x(50) means the average particle size that 50 wt. % of all droplets in the emulsion show;

x(90) means the average particle size that 90 wt. % of all droplets in the emulsion show; and

x(10) means the average particle size that 10 wt. % of all droplets in the emulsion show.

2. The emulsion of Claim 1, wherein said essential oil is selected from orange oil, citrus oil, lime oil, mandarin oil and their mixtures.

3. The emulsion of Claim 1, wherein said lipid is a mid-chain triglyceride (MCT).

4. The emulsion of Claim 1, wherein said emulsifier is a polysaccharide.

5. The emulsion of Claim 4, wherein said polysaccharide is gum Arabic.

6. The emulsion of Claim 4, wherein said polysaccharide is a starch derivative.

7. The emulsion of Claim 1, comprising

(a) 5 to 20 wt. % essential oils;

(b) 5 to 20 wt. % lipids;

(c) 1 to 15 wt. % emulsifiers; and

(d) 1 to 9 wt. % refractive index modifier, wherein said refractive index modifier comprises glycerol ester of wood rosin;

on condition that the amounts add with water and additional auxiliary agents to 100 wt. %.

8. A food composition comprising or consisting of the oil-in-water emulsion of Claim 1.

9. The composition of Claim 8 comprising said emulsion in amounts of 0.05 to 5.0 wt. %.

10. The composition of Claim 8 being a beverage.

11. A method for increasing turbidity and improving storage stability of an oil-in-water emulsion comprising

(a) at least one essential oil;

(b) at least one lipid;

(c) at least one emulsifier; and

(d) at least one glycerol ester of wood rosin,

by adjusting

(i) the average particle size x(50) of the oil droplets in said emulsion to a value of from 0.1 to 0.6 $\mu$m and/or

(ii) the difference between the average particle size x(90) minus the average particle size x(10) to a value less than 0.8 $\mu$m, and

wherein

x(50) means the average particle size that 50 wt. % of all droplets in the emulsion show;

x(90) means the average particle size that 90 wt. % of all droplets in the emulsion show; and

and x(10) means the average particle size that 10 wt. % of all droplets in the emulsion show.

12. The use of the emulsion of Claim 1 for preparing a turbid beverage with improved storage stability.

**Patentansprüche**

1. Eine trübe Öl-in-Wasser Emulsion mit verbesserter Lagerstabilität, umfassend

(a) mindestens ein ätherisches Öl;

(b) mindestens ein Lipid;

(c) mindestens einen Emulgator;
(d) mindestens einen Glycerinester aus Wurzelharz;
wobei

(i) die durchschnittliche Partikelgröße x(50) von allen Öltröpfchen in der Emulsion zwischen 0,1 und 0,6 µm liegt und/oder
(ii) der Unterschied zwischen der durchschnittlichen Partikelgröße x(90) und der durchschnittlichen Partikelgröße x(10) weniger al 0,8 µm beträgt, und

wobei
x(50) für die durchschnittliche Partikelgröße steht, die 50 Gew.% aller Tröpfchen in der Emulsion aufweisen;
x(90) für die durchschnittliche Partikelgröße steht, die 90 Gew.% aller Tröpfchen in der Emulsion aufweisen;
x(10) für die durchschnittliche Partikelgröße steht, die 10 Gew.% aller Tröpfchen in der Emulsion aufweisen.

2. Die Emulsion nach Anspruch 1, wobei das ätherische Öl ausgewählt wird aus Orangenöl, Zitronenöl, Limettenöl, Mandarinenöl und Mischungen davon.

3. Die Emulsion nach Anspruch 1, wobei das Lipid ein mittelkettiges Triglycerid (MCT) ist.

4. Die Emulsion nach Anspruch 1, wobei der Emulgator ein Polysaccharid ist.

5. Die Emulsion nach Anspruch 4, wobei das Polysaccharid Gummi Arabicum ist.

6. Die Emulsion nach Anspruch 4, wobei das Polysaccharid ein Stärkederivat ist.

7. Die Emulsion nach Anspruch 1, umfassend

(a) 5 bis 30 Gew.% ätherische Öle;
(b) 5 bis 20 Gew.% Lipide;
(c) 1 bis 15 Gew.% Emulgatoren; und
(d) 1 bis 9 Gew.% Brechungsindexmodifikatoren, wobei die Brechungsindexmodifikatoren Glycerinester aus Wurzelharz umfassen;

mit der Maßgabe, dass sich die Mengenangaben zusammen mit Wasser und zusätzlichen Hilfsstoffen zu 100 Gew.% addieren.

8. Eine Lebensmittelzusammensetzung umfassend oder bestehend aus der Öl-in-Wasser Emulsion nach Anspruch 1.

9. Die Zusammensetzung nach Anspruch 8 umfassend die Emulsion in Mengen von 0,05 bis 5,0 Gew.%.

10. Die Zusammensetzung nach Anspruch 8, die ein Getränk ist.

11. Ein Verfahren zur Steigerung der Trübung und Verbesserung der Lagerstabilität einer Öl-in-Wasser Emulsion umfassend

(a) mindestens ein ätherisches Öl;
(b) mindestens ein Lipid;
(c) mindesten ein Emulgator; und
(d) mindestens einen Glycerinester aus Wurzelharz;
durch Anpassung

(i) der durchschnittlichen Partikelgröße x(50) von allen Öltröpfchen in der Emulsion auf einen Wert von 0,1 bis 0,6 µm und/oder
(ii) des Unterschieds zwischen der durchschnittlichen Partikelgröße x(90) minus der durchschnittlichen Partikelgröße x(10) zu einem Wert von weniger als 0,8 µm, und

wobei
x(50) für die durchschnittliche Partikelgröße steht, die 50 Gew.% aller Tröpfchen in der Emulsion aufweisen;

x(90) für die durchschnittliche Partikelgröße steht, die 90 Gew.% aller Tröpfchen in der Emulsion aufweisen; und x(10) für die durchschnittliche Partikelgröße steht, die 10 Gew.% aller Tröpfchen in der Emulsion aufweisen.

**12.** Die Verwendung der Emulsion nach Anspruch 1 zur Herstellung eines trüben Getränks mit verbesserter Lagerstabilität.

**Revendications**

**1.** Émulsion huile dans eau turbide ayant une stabilité à la conservation améliorée, comprenant

(a) au moins une huile essentielle;
(b) au moins un lipide;
(c) au moins un émulsifiant; et
(d) au moins un ester de glycérol de colophane de bois,
dans laquelle

(i) la taille de particule moyenne x(50) des gouttelettes d'huile dans ladite émulsion est dans la plage de 0,1 à 0,6 μm et/ou
(ii) la différence entre la taille de particule moyenne x(90) et la taille de particule moyenne x(10) est inférieure à 0,8 μm, et

dans laquelle
x(50) désigne la taille de particule moyenne que 50 % en poids de la totalité des gouttelettes dans l'émulsion présentent;
x(90) désigne la taille de particule moyenne que 90 % en poids de la totalité des gouttelettes dans l'émulsion présentent; et
x(10) désigne la taille de particule moyenne que 10 % en poids de la totalité des gouttelettes dans l'émulsion présentent.

**2.** Émulsion de la revendication 1, dans laquelle ladite huile essentielle est choisie parmi l'huile d'orange, l'huile d'agrume, l'huile de citron vert, l'huile de mandarine et leurs mélanges.

**3.** Émulsion de la revendication 1, dans laquelle ledit lipide est un triglycéride à chaîne moyenne (MCT).

**4.** Émulsion de la revendication 1, dans laquelle ledit émulsifiant est un polysaccharide.

**5.** Émulsion de la revendication 4, dans laquelle ledit polysaccharide est la gomme arabique.

**6.** Émulsion de la revendication 4, dans laquelle ledit polysaccharide est un dérivé d'amidon.

**7.** Émulsion de la revendication 1, comprenant

(a) 5 à 20 % en poids d'huiles essentielles;
(b) 5 à 20 % en poids de lipides;
(c) 1 à 15 % en poids d'émulsifiants; et
(d) 1 à 9 % en poids de modificateur d'indice de réfraction, ledit modificateur d'indice de réfraction comprenant un ester de glycérol de colophane de bois;

à condition que la somme des quantités avec l'eau et les agents auxiliaires additionnels soit de 100 % en poids.

**8.** Composition alimentaire comprenant ou constituée de l'émulsion huile dans eau de la revendication 1.

**9.** Composition de la revendication 8 comprenant ladite émulsion dans des quantités de 0,05 à 5,0% en poids.

**10.** Composition de la revendication 8 étant une boisson.

**11.** Procédé d'augmentation de la turbidité et d'amélioration de la stabilité à la conservation d'une émulsion huile dans eau comprenant

(a) au moins une huile essentielle;
(b) au moins un lipide;
(c) au moins un émulsifiant; et
(d) au moins un ester de glycérol de colophane de bois,
par ajustement de

(i) la taille de particule moyenne x(50) des gouttelettes d'huile dans ladite émulsion à une valeur de 0,1 à 0,6 μm et/ou
(ii) la différence entre la taille de particule moyenne x(90) moins la taille de particule moyenne x(10) à une valeur inférieure à 0,8 μm, et

dans lequel
x(50) désigne la taille de particule moyenne que 50 % en poids de la totalité des gouttelettes dans l'émulsion présentent;
x(90) désigne la taille de particule moyenne que 90 % en poids de la totalité des gouttelettes dans l'émulsion présentent; et
x(10) désigne la taille de particule moyenne que 10 % en poids de la totalité des gouttelettes dans l'émulsion présentent.

12. Utilisation de l'émulsion de la revendication 1 pour préparer une boisson turbide ayant une stabilité à la conservation améliorée.

**Figure 1**

**Figure 2**

Figure 3

Figure 4

Figure 5

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3959510 A
- US 4971828 A
- EP 2601848 A1
- WO 2008148383 A1

**Non-patent literature cited in the description**

- **FLEET et al.** Effect of illumination intensity on visual perception of turbidity. *Food Qual. Pref.,* 2005, vol. 16, 536-544
- *Can. Inst. Food Sci. Technol. J.,* 1989, vol. 22, 129-132
- *Food Qual. Pref.,* 1999, vol. 10, 421-436
- *J. Sens. Stud.,* 2001, vol. 16, 447-460
- *Water Res.,* 1998, vol. 32, 3143-3145